Europäisches Patentamt

European Patent Office

Office européen des brevets

(11) Publication number: **0 149 274**
**B1**

## (12) EUROPEAN PATENT SPECIFICATION

(45) Date of publication of patent specification: **07.10.87**

(21) Application number: **84201843.4**

(22) Date of filing: **12.12.84**

(51) Int. Cl.⁴: **B 65 G 47/19, E 01 C 19/20, A 01 C 15/18**

(54) Dosing device comprising a tiltable crusher plate.

(30) Priority: **03.01.84 NL 8400022**

(43) Date of publication of application:
**24.07.85 Bulletin 85/30**

(45) Publication of the grant of the patent:
**07.10.87 Bulletin 87/41**

(84) Designated Contracting States:
**BE DE FR GB NL**

(56) References cited:
**DE-A-1 481 184**
**DE-A-2 218 664**
**DE-A-2 902 284**
**DE-A-3 118 757**
**DE-C- 704 166**
**NL-A-8 201 441**

(73) Proprietor: **Nido Universal Machines B.V.**
**Industriestraat 7**
**NL-7451 BA Holten (NL)**

(72) Inventor: **Van Vooren, Cornelis Bastiaan**
**Borg Ekenstein 25**
**NL-7608 GW Almelo (NL)**

(74) Representative: **Schumann, Bernard Herman**
**Johan et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to a dosing device for powdery or granular material comprising a hopper for the material to be dosed and a drivable transport member adjoining a delivery side of said hopper and bounding a passage together with a wall of the hopper and a crusher plate extending at least from the passage towards the interior of the hopper and diverging with respect to the transport member.

Such a dosing device is known from NL-8201441 and may be used, for example, for dosing granulated salt. In order to prevent large lumps of salt or stones in the granulated salt from clogging the passage wholly or partly—and hence from disturbing a correct dosing—this known device comprises a crusher plate which extends from the passage towards the interior of the hopper by which with the aid of an upwardly and downwardly movable shuttle the passage can be enlarged for allowing such lumps or stones to pass and/or to redice them by crushing. Due to these additional means such a known dosing device is relatively expensive and has to be periodically subjected to maintenance and/or repair.

Removal of the lumps and/or stones prior to loading the stock container is undesirable because at the instants at which the dosing device has to be used for dosing granulated salt rapid loading of the stock container is desired and necessary.

The invention has for its object to improve the dosing device of the kind set forth in the preamble in a sense such that the above-mentioned disadvantages are avoided to a great extent, whilst with the aid of relatively simple means, despite the presence of large lumps and/or stones a uniform dosing rate of the powdery or granular material is ensured as much as possible. According to the invention this is achieved with the aid of a crusher plate which is connected with the wall of the hopper by hinge means which yieldingly hold the crusher plate in said diverging position.

It is thus ensured that during dosing the material lumps jammed between the transport member and the crusher plate are broken up by the hinging movement of the crusher plate and conducted away in the form of crushed, pulverulent material from the stock container, whereas the larger lumps are retained at a distance from the passage so that it is prevented at any time that the passage should be clogged. It is important in this insight that the crusher plate is actuated by the lumps of salt and/or stones likely to clog the passage, and tilted towards the transport member as to break up lumps of salt and/or stones residing under the crusher plate. During the return movement of the crusher plate a break-up effect is applied to the larger lumps residing upstream under the crusher plate.

In a first embodiment the hinge means comprise a slightly flexible, elastic strip of synthetic resin, preferably polyurethane, which material is particularly resistant and may be used, for exampe, for more than ten years. In a second embodiment the hinge means comprise a hinge and reset means co-operating with the hinge and being arranged between the stock container and the crusher plate.

When the crusher plate extends through the passage and more preferably, is formed by at least two plate parts, whilst in the direction of divergence an angle between each of the plate parts and the transport member opens out, the hinging movement for pulverizing larger lumps is strengthened and accelerated.

Since the hinge means are fastened to the outer side of the stock container, contact with corrosive granulated salt is avoided when powdery or granular salt material is used so that the durability of the hinge means is enhanced.

When the hinge means are fastened to an adjustable dosing slide, the dosing rate of the resultant dosing device is adjustable.

When the transport member is provided with a profile an improvement is obtained in pressing the lumps to be pulverized and maintaining them in contact with the crusher plate during the crushing movement of the plate.

When a discharging member is arranged on the side of the crusher plate remote from the transport member, the material to be dosed present on the crusher plate is discharged to the transport member.

The above-mentioned and further features will be described with reference to a few non-limitative examples of a dosing device according to the invention with reference to the accompanying drawing.

The drawing shows in:

Fig. 1 a sectional view of a dosing device embodying the invention connected with a spreading member and disposed on a mobile vehicle;

Fig. 2 an enlarged perspective view of detail II of Fig. 1;

Fig. 3 a sectional view taken on the line III—III on a different scale;

Fig. 4 a variant of Fig. 3;

Fig. 5 a perspective view of a crusher plate of Fig. 2; and

Fig. 6 a variant of the hinge means shown in Fig. 3.

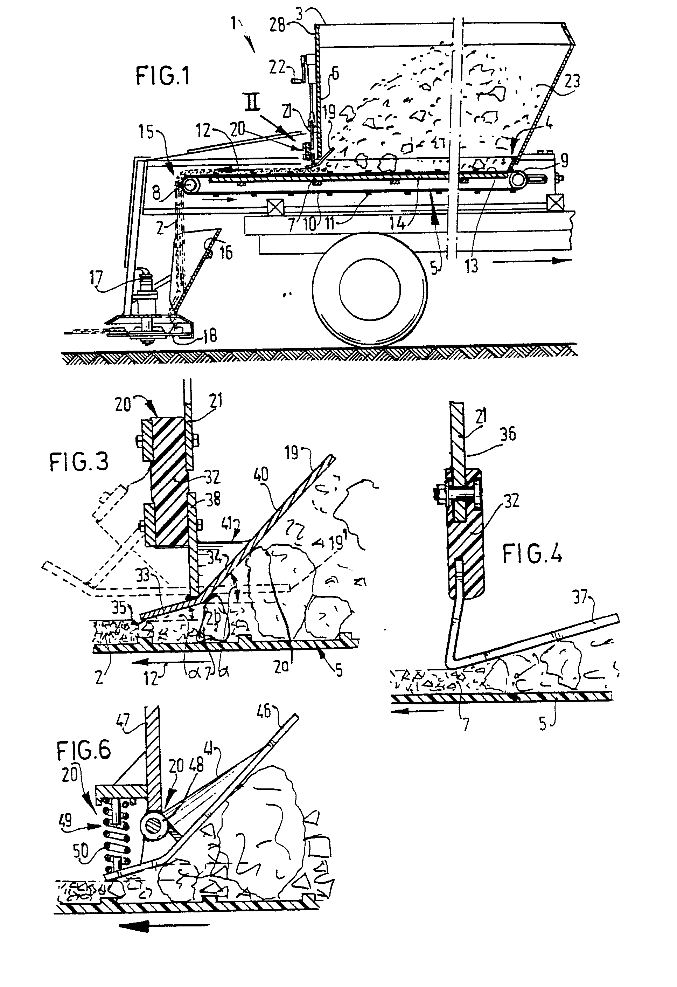

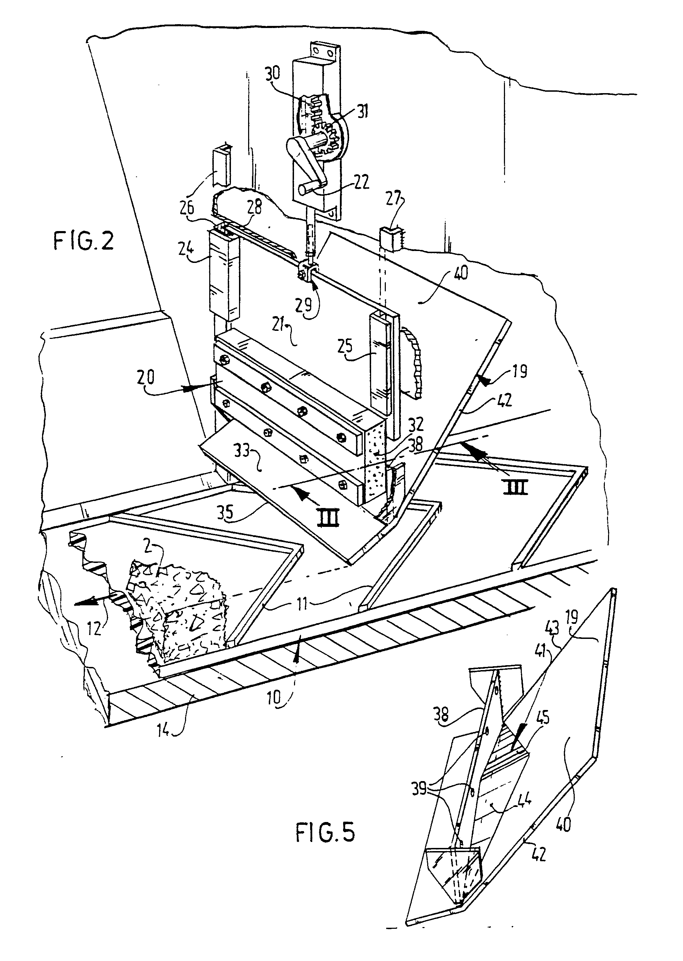

Fig. 1 show a dosing device 1 embodying the invention for powdery or granular material 2 comprising a funnel-shaped hopper 3 for the material 2 to be dosed and a transport member 5 adjoining a delivery side of said hopper and bounding a passage 7 together with a wall 6 of the hopper 3.

The drivable transport member 5 is formed by an endless belt 10 passed around reversing rollers 8, 9 and provided with profiles 11 mainly shaped in the form of a V; in the transport direction of the endless belt 10 the limbs of the V are first passed through the passage 7. An upper run 13 of the transport member 5 is supported by a carrying layer 14. A delivery end 15 of the transport member 5 discharges the material 2 into a shoot 16, which passes the material to a disc 18 rotatably driven by a motor 17, from where the material is ejected. The dosing member 1 embodying the invention is characterized by a crusher plate 19, which is fastened through hinge means 20 to a wall 21 of the hopper 3, in this case a dosing slide 21 movable towards and away from the transport member 5 with the aid of a handle 22. By means of this handle 22 the passage 7 can be adjusted and hence the dose of the material 2 can be set. From Fig. 1 it is apparent that the crusher plate 19 extends across the passage 7 towards the interior 23 of the hopper 3, whilst the crusher plate 19 diverges with respect to the transport member 5, particularly to the upper run 13. Thus the material conveyed by the transport member 5 towards the passage 7 is pushed against the crusher plate 19.

Fig. 2 shows in greater detail the fastening of the crusher plate 19 through the hinge means 20 to the dosing slide 21. The dosing slide 21 is provided with two angle-section profiles 24, 25 and angle-section profiles 26, 27 guided along a wall 28. Through a fork 29, a toothed rack 30 and a pinion 31 the dosing slide 21 is connected with the handle 22. Fig. 2 also shows the orientation of the profiles 11 with respect to the transport direction 12.

Fig. 3 shows more in detail the operation of the hinge means 20 and the crusher plate 19 during the delivery of material 2 through the passage 7. In this case the hinge means 20 have a strip 32 of slightly flexible, elastic synthetic resin, preferably polyurethane (Vulcolan, trade mark Bayer Leverkusen FRG) arranged between the crusher plate 19 and the slide 21. Moreover, the crusher plate 19 extends across the passage 7 and comprises two plate parts 33 and 34, whilst in the direction of divergence, to wit a direction opposite the transport direction 12, the angle α between a plate part and the transport member 5 increases. The plate part 33 extends from the passage 7 as far as beyond the hopper. The material 2 conveyed by the transport member 5 towards the passage 7 is levelled by a lower rim 35 to a height which is adjustable by means of the handle 22. Lumps of material 2a are pushed against the crusher plate 19 at such a distance from the passage 7 that these lumps 2a can not block the passage 7. Smaller lumps and fine material 2 accumulate below the plate part 33, which results in a hinging movement into the position of the crusher plate 19 indicated by broken lines, in which the lumps 2a are pulverized to sizes capable of passing below the lower rim 35. In this way a dosing is obtained in which the dosing member is provided throughout the width substantially up to the set height, which results in a substantially constant dosing rate. Unpulverizable hard lumps 2b can leave the hopper 3 because the crusher plate 19 can swing away into the position indicated by broken lines, whilst a sufficiently large opening is made for passing the material 2b. This results only in a particularly transient interruption of the adjusted dosing rate because after the passage of the material 2b the crusher plate 19 returns into its initial position in which the crusher plate crushes along the material 2b and pushes the material lying behind the same back into the hopper 3 so that immediately after the material 2b the adjusted dosing rate is again attained.

Because the crusher plate 19 diverges, with respect to the transport member 5, towards the interior of the hopper 3, very large lumps of material pulverizable or non-pulverizable are held at a large distance from the passage 7 so that during dosing the passage 7 will not become clogged, whilst after emptying the hopper, if necessary, the particularly large lumps can be removed from the hopper 3.

Fig. 4 shows a variant corresponding with that of Fig. 3, in which the strip of polyurethane 32 is arranged on the inner side 36 of the slide 21. Thus a hinge point for the hinging movement of the crusher plate 37 with respect to the slide 21 and the passage 7 is located within the hopper 3 so that in this case the crusher plate 37 can extend only from the passage 7 to the interior of the hopper 3, whilst it diverges, however, with respect to the transport member 5.

Fig. 5 shows in a perspective view the crusher plate 19 of Fig. 3, which is provided with fastening means 39 arranged in a plate 38 for connection with the strip 32 of synthetic resin. A side of the crusher plate 19 remote from the transport member 5 is provided with a discharging member 41 comprising two triangular plates 44, 45 sloping towards edges 42, 43.

Fig. 6 shows a different embodiment of the hinge means 20, which are formed in this case by a hinge 48 arranged between the crusher plate 46 and the dosing slides 47 and by reset means 49, in this case a spring 50 co-operating with the hinge 48 and being fastened to the hopper 3, in this case, to the slide 47, so that the crusher plate 46 can be reset from a position indicated by broken lines in Fig. 3 into a position indicated by solid lines.

Although the device is described herein for dosing granulated salt, it will be obvious that the device embodying the invention may as well be used for dosing other powdery or granular material with or without a desired adjustable dosing rate, which can be obtained when the hinge means are fastened to an adjustable dosing slide.

When the hinge means 20 are of synthetic material a particularly advantageous dosing device is obtained because in this case a mechanical turn between different materials is avoided so that in the event of granulated salt no repair or maintenance at all is required on account of corrosion phenomena on hinge means.

A stream of material leaving the hopper 3 and lying on the transport member 5 should have a minimum thickness so that the stream of material, as the case may be, prior to the delivery to the rotating disc, can be wetted throughout with a CaCl$_2$ solution.

Since below a lower rim of the crusher plate a substantially constant thickness of the material 2 is allowed to pass, a particularly accurately adjustable dosing rate can be obtained so that particularly small dose amounts, for example, to 5 gs per square metre of road surface are possible.

## Claims

1. A dosing device (1) for powdery or granular material comprising a hopper (3) for the material (2) to be dosed and a drivable transport member (5) adjoining a delivery side of said hopper (3) and bounding a passage (7) together with a wall (6) of the hopper (3) and a crusher plate (19, 37, 46) extending at least from the passage (7) towards the interior (23) of the hopper (3) and diverging with respect to the transport member (5), characterized in that said crusher plate (19, 37, 46) is connected with said wall (6) of the hopper (3) by hinge means (20, 32, 48) which yieldingly hold said crusher plate (19, 37, 46) in said diverging position.

2. A dosing device (1) as claimed in Claim 1 characterized in that the hinge means (20, 32) comprise a slightly flexible, elastic strip (32) of synthetic resin.

3. A dosing device (1) as claimed in Claim 2 characterized in that the synthetic resin is polyurethane.

4. A dosing device (1) as claimed in claim 1 characterized in that the hinge means (20, 32) comprise hinge (48) and reset means (49) cooperation with the hinge (48) and being arranged between the hopper (3) and the crusher plate (46).

5. A dosing device (1) as claimed in anyone of the preceding Claims characterized in that the crusher plate (19, 46) extends across the passage (7).

6. A dosing device (1) as claimed in anyone of the preceding Claims characterized in that the crusher plate (19, 46) comprises at least two plate parts (33, 34) and the angle (α) between each of the plate parts (33, 34) and the transport member (5) increases in the direction of divergence.

7. A dosing device (1) as claimed in Claim 6 characterized in that the first plate part (33) extends from the passage (7) as far as beyond the hopper (3).

8. A dosing device (1) as claimed in anyone of the preceding Claims characterized in that the hinge means (20, 32) is fastened to an adjustable dosing slide (21, 47).

9. A dosing device (1) as claimed in anyone of the preceding Claims characterised in that the hinge means (20, 32) is fastened to the outer side of the hopper (3).

10. A dosing device (1) as claimed in anyone of the preceding Claims characterized in that the transport member (5) is provided with a profile (11).

11. A dosing device (1) as claimed in anyone of the preceding Claims characterized in that a discharging member (41) is arranged on a side of the crusher plate (19, 46) remote from the transport member (5).

## Patentansprüche

1. Dosierungseinrichtung (1) für pulverförmiges Material oder für Granulat mit einem Aufgabebehälter (3) für das zu dosierende Material (2) und mit einer antreibbaren Transportvorrichtung (5), die an eine Förderseite des Aufgabebehälters (3) anschließt und zusammen mit einer Wand (6) des Aufgabebehälters (3) einen Kanal (7) begrenzt, und mit einer Brechplatte (19, 37, 46), die wenigstens vom Kanal (7) nach dem Inneren (23) des Aufgabebehälters (3) vorsteht und gegenüber der Transportvorrichtung (5) divergiert, dadurch gekennzeichnet, daß die Brechplatte (19, 37, 46) mit der Wand (6) des Aufgabebehälters (3) über eine Gelenkanordnung (20, 32, 48) verbunden ist, die die Brechplatte (19, 37, 46) nachgiebig in der divergierenden Stellung hält.

2. Dosierungsvorrichtung (1) nach Anspruch 1, dadurch gekennzeichnet, daß die Gelenkanordnung (20, 32) einen leicht flexiblen elastischen Streifen (32) aus synthetischem Kunstharz aufweist.

3. Dosierungsvorrichtung (1) nach Anspruch 2, dadurch gekennzeichnet, daß der synthetische Kunststoff Polyurethan ist.

4. Dosierungseinrichtung (1) nach Anspruch 1, dadurch gekennzeichnet, daß die Gelenkanordnung (20, 32) ein Scharniergelenk (48) und Rückstellmittel (49) aufweist, welch letztere mit dem Gelenk (48) zusammenwirken und zwischen dem Aufgabebehälter (3) und der Brechplatte (46) angeordnet sind.

5. Dosierungseinrichtung (1) nach einem der vorhergehenden Ansprüche, dadurch gekennzeichnet, daß die Brechplatte (19, 46) sich über den Kanal (7) erstreckt.

6. Dosierungseinrichtung (1) nach einem der vorhergehenden Ansprüche, dadurch gekennzeichnet, daß die Brechplatte (19, 46) wenigstens zwei Plattenteile (33, 34) aufweist und daß der Winkel (α) zwischen den Plattenteilen (33, 34) und der Transportvorrichtung (5) in Divergenzrichtung ansteigt.

7. Dosierungseinrichtung (1) nach Anspruch 6, dadurch gekennzeichnet, daß der erste Plattenteil (33) vom Kanal (7) bis in den Aufgabebehälter (3) verläuft.

8. Dosierungseinrichtung (1) nach einem der vorhergehenden Ansprüche, dadurch gekennzeichnet, daß die Gelenkanordnung (20, 32) an einem einstellbaren Dosierungsschieber (21, 47) besfestigt ist.

9. Dosierungseinrichtung (1) nach einem der vorhergehenden Ansprüche, dadurch gekennzeichnet, daß die Gelenkanordnung (20, 32) an der Außenseite des Aufgabebehälters (3) befestigt ist.

10. Dosierungseinrichtung (1) nach einem der vorhergehenden Ansprüche, dadurch gekennzeichnet, daß die Transportvorrichtung (5) mit einem Profil (11) versehen ist.

11. Dosierungseinrichtung (1) nach einem der vorhergehenden Ansprüche, dadurch gekennzeichnet, daß ein Abgabeglied (41) auf der der Transportvorrichtung (5) abgewandten Seite der Brechplatte (19, 46) angeordnet ist.

## Revendications

1. Dispositif de dosage (1) pour matières pulvérulentes ou granulaires, comprenant une trémie (3) pour la matière (2) à doser et un élément transporteur entraîné (5) qui est adjacent au côté de sortie de la trémie (3) et qui délimite un passage (7) en combinaison avec une paroi (6) de la trémie (3), et une plaque de concassage (19, 37, 46) qui s'étend vers l'intérieur (23) de la trémie (3), au moins à partir du passage (7), et diverge par rapport à l'élement transporteur (5), caractérisé en ce que ladite plaque de concassage (19, 37, 46) est reliée à ladite paroi (6) de la trémie (3) par des moyens du type charnière (20, 32, 48) qui maintiennent élastiquement ladite plaque de concassage (19, 37, 46) dans ladite position divergente.

2. Dispositif de dosage (1) selon la revendication 1, caractérisé en ce que les moyens du type charnière (20, 32) comprennent une bande élastique, légèrement flexible, faite de résine synthétique.

3. Dispositif de dosage (1) selon la revendication 2, caractérisé en ce que la résine synthétique est un polyuréthane.

4. Dispositif de dosage (1) selon la revendication 1, caractérisé en ce que les moyens du type charnière (20, 32) comprennent une charnière (48) et des moyens de rappel (49) qui coopèrent avec la charnière (48) et sont agencés entre la trémie (3) et la plaque de concassage (46).

5. Dispositif de dosage (1) selon l'une quelconque des revendications précédentes, caractérisé en ce que la plaque de concassage (19, 46) s'étend en travers du passage (7).

6. Dispositif de dosage (1) selon l'une quelconque des revendications précédentes, caractérisé en ce que la plaque de concassage (19, 46) comprend au moins deux parties de plaque (33, 34) et en ce que l'angle (α) compris entre chacune des parties de plaque (33, 34) et l'élément transporteur (5) croît dans le sens de la divergence.

7. Dispositif de dosage (1) selon la revendication 6, caractérisé en ce que la première partie de plaque (33) s'étend à partir du passage (7) au-delà de la trémie (3).

8. Dispositif de dosage (1) selon l'une quelconque des revendications précédentes, caractérisé en ce que les moyens du type charnière (20, 32) sont fixés à un coulisseau de dosage réglable (21, 47).

9. Dispositif de dosage (1) selon l'une quelconque des revendications précédentes, caractérisé en ce que les moyens du type charnière (20, 32) sont fixés à la face extérieure de la trémie (3).

10. Dispositif de dosage (1) selon l'une quelconque des revendications précédentes, caracterisé en ce que l'élément transporteur (6) est muni d'un profil (11).

11. Dispositif de dosage (1) selon l'une quelconque des revendications précedentes, caractérisé en ce qu'un élément de déchargement (41) est agencé sur la face de la plaque de concassage (19, 46) qui est la plus éloignée de l'élément transporteur (5).

0 149 274

FIG.1

FIG.3

FIG.4

FIG.6

1

FIG.2

FIG.5